# EUROPÄISCHE PATENTSCHRIFT

(11) **EP 3 475 637 B1**
(45) Veröffentlichungstag und Bekanntmachung des Hinweises auf die Patenterteilung: **22.01.2020**
(21) Anmeldenummer: 17731137.0
(22) Anmeldetag: 19.06.2017
(51) Int. Cl.: F27B 7/20, C04B 7/43, C04B 7/44

(54) **ANLAGE UND VERFAHREN ZUR THERMISCHEN BEHANDLUNG VON FLUGFÄHIGEM ROHMATERIAL**
INSTALLATION AND METHOD FOR THE THERMAL TREATMENT OF RAW MATERIAL THAT CAN BECOME AIRBORNE
INSTALLATION ET PROCÉDÉ DE TRAITEMENT THERMIQUE D'UNE MATIÈRE PREMIÈRE DISPERSIBLE

(30) Priorität: 22.06.2016 DE 102016211181
(43) Veröffentlichungstag der Anmeldung: 01.05.2019
(73) Patentinhaber: thyssenkrupp Industrial Solutions AG, 45143 Essen (DE); thyssenkrupp AG, 45143 Essen (DE)
(72) Erfinder: ROHLOFF, Kathrin, 20457 Hamburg (DE); SCHEFER, Dirk, 59320 Ennigerloh (DE)
(74) Vertreter: thyssenkrupp Intellectual Property GmbH
(86) Internationale Anmeldenummer: PCT/EP2017/064865
(87) Internationale Veröffentlichungsnummer: WO 2017/220457

(56) Entgegenhaltungen:
- EP-A2- 1 783 448
- DE-A1-102004 009 689

## Beschreibung

Die Erfindung betrifft eine Anlage sowie ein Verfahren zur thermischen Behandlung von flugfähigem Rohmaterial, insbesondere Zementrohmehl und/oder mineralischen Produkten, mit einer von Heißgasen durchströmten Leitung und zumindest einem Mittel zur Zugabe des Rohmaterials.

Zur Behandlung von Zementklinker oder Erzen oder Tonen oder anderen mineralischen Produkten werden große Mengen an thermischer Energie benötigt, um das gemahlene Rohmehl zu Trocknen und/oder zu Calcinieren und/oder zu Reduzieren. Hierzu wird das Rohmehl im Flugstrom auf eine benötigte Temperatur erhitzt, bevor es weiterbehandelt wird. Eine nachfolgend beschriebene Leitung mit wenigstens zwei Brennstoffbehandlungsbereichen kann in Industriezweigen zum Einsatz kommen, bei denen Rohstoffe thermisch behandelt werden. Beispielhaft sind hier die Zement- und/oder Mineralindustrie genannt.

Beispielsweise zur Herstellung von Zementklinker wird Rohmehl aus gemahlenem kalkhaltigem und silikathaltigem Gestein einer Wärmebehandlung unterzogen, wobei der Kalkstein von CO2 befreit und in gebrannten Kalk CaO überführt wird. In einem weiteren Schritt wird üblicherweise das durch die CO2-Befreiung entsäuerte Rohmehl unter Wärmeeinfluss zu verschiedenen Calciumsilikatphasen gesintert.

Bei der Vorcalcinierung (Entsäuerung) wird das aus der zweituntersten Zyklonstufe austretende heiße Rohmehl von aus dem Drehrohrofen aufströmendem Heißgas mitgerissen und in einen Calcinator geführt, der zwischen Zyklonvorwärmer und Drehrohrofen angeordnet ist. Dabei handelt es sich üblicherweise um ein Steigrohr, in dem Ofengas und Brenngut im Gleichstrom geführt werden und miteinander reagieren. Um die endotherm ablaufende Entsäuerungsreaktion aufrecht zu erhalten, werden im Calcinator Brennstoffe zugegeben.

Die für die Calcinatorfeuerung erforderliche Verbrennungsluft kann beispielswiese durch den Drehrohrofen und/oder in einer gesonderten Gasleitung, der sogenannten Tertiärluftleitung, vom Klinkerkühler zum Calcinator geführt werden.

Aus der DE 10 2014 113 127 A1 ist eine Anlage zur thermischen Behandlung von Rohmehl bekannt. Bei bekannten Calcinatoren gelangen häufig Schadstoffe, wie Stickoxide, Dioxine, Furane oder nicht umgesetzte Brennstoffreste, die beispielsweise aus einer nicht optimalen Verbrennung resultieren, in die Steigleitung des Calcinators. Eine Optimierung der Verbrennungsparameter zur Senkung der Schadstoffbildung, wobei gleichmäßig verbranntes/veraschtes Material oder zumindest thermisch vorbehandeltes Material in die Steigleitung übergehen soll führt häufig zu einer Verringerung des Calcinierungsgrades des Rohmehls.

Davon ausgehend ist es Aufgabe der vorliegenden Erfindung, eine Anlage zur thermischen Behandlung von Rohmehl und/oder Mineralstoffen bereitzustellen, die eine optimale Calcinierung des Rohmehls und/oder Mineralstoffe bei gleichzeitig geringem Schadstoffausstoß in die Steigleitung ermöglicht.

Gelöst wird diese Aufgabe durch eine Anlage zur thermischen Behandlung von flugfähigem Rohmaterial mit den Merkmalen des Patentanspruchs 1 sowie durch ein Verfahren zur thermischen Behandlung von flugfähigem Rohmaterial mit den Merkmalen des Patentanspruchs 11. Vorteilhafte Weiterbildungen ergeben sich aus den abhängigen Ansprüchen.

Eine Anlage zur thermischen Behandlung von flugfähigem Rohmaterial, insbesondere Zementrohmehl und/oder Mineralstoffen, umfasst nach einem ersten Aspekt eine von Heißgasen durchströmte Leitung und zumindest ein Mittel zur Zugabe des Rohmaterials. Des Weiteren weist die Anlage zumindest zwei Behandlungsbereiche zur thermischen Behandlung, insbesondere Verbrennung, von Brennstoffen auf, die mit der Leitung in Verbindung stehen, sodass zumindest ein Teil der in den Behandlungsbereichen erzeugten Wärme, insbesondere Heißgas, in die Leitung strömbar ist.

Die Heißgase umfassen vorzugsweise aus einem Drehrohrofen einer Zementanlage austretende Heißgase, die in den Eingangsbereich, insbesondere den unteren Bereich der Leitung, eingeführt werden und durch die Leitung strömen. Die Leitung umfasst beispielsweise eine Steigleitung, insbesondere ein Steigrohr, das sich im Wesentlichen vertikal erstreckt und von dem Drehrohrofen in Richtung der letzten Vorwärmstufe des Vorwärmers einer Zementanlage verläuft.

Unter der Behandlung von Brennstoffen wird beispielsweise die Trocknung, Verbrennung, zumindest teilweise Entgasung und/oder die zumindest teilweise Umsetzung des Brennstoffes verstanden. Bei den Brennstoffen handelt es sich beispielsweise um Haushalts-, Industrie- und/oder Gewerbeabfälle. Weiterhin zählen sowohl flüssige, pastöse wie auch feste Abfälle und Biomassen, die für die energetische Verwertung/Mitverbrennung geeignet sind, dazu, welche endkonfektioniert und heizwertreich energetisch verwertet werden. Die Brennstoffe umfassen ferner beispielsweise Lösemittel, Altöl, ganze oder geschredderte Altreifen sowie getrockneter Klärschlamm, Reishülsen, Stroh oder gar Tiermehl. Anorganische und inerte Bestandteile sind insbesondere ebenfalls enthalten. Der Behandlungsbereich umfasst beispielsweise eine Brennkammer zur wenigstens teilweisen thermischen Behandlung des Brennstoffs. Der Behandlungsbereich umfasst einen Bereich, der strömungstechnisch zumindest teilweise von der Leitung getrennt angeordnet ist, sodass die die Leitung durchströmenden Heißgase den Behandlungsbereich nicht oder zumindest nicht vollständig durchströmen. In dem Bereich ergibt sich insbesondere eine Änderung der Hauptströmungsrichtung der Leitung. Der Behandlungsbereich und die Leitung sind derart miteinander verbunden, dass die im Behandlungsbereich durch die wenigstens teilweise Umsetzung des Brennstoffes erzeugten Heißgase zumindest teilweise in die Leitung strömen. Vorzugsweise treten die Brennstoffe, insbesondere Feststoffe, aus dem Behandlungsbereich zumindest teilweise in die Leitung ein. Die im Behandlungsbereich erzeugte Wärme, insbesondere Heißgase und die Wärme aus der weiteren Umsetzung des Brennstoffes auch innerhalb der Leitung bewirken insbesondere die Entsäuerung, des Rohmehls .

Zumindest einer der Behandlungsbereiche weist eine Auflagefläche zur Aufnahme des Brennstoffs auf, wobei der Brennstoff mittels Schwerkraft, pneumatisch oder mechanisch entlang der Auflagefläche, insbesondere in Richtung der Leitung, bewegt wird. Beispielweise umfasst die Auflagefläche eine Ebene, die in Richtung der Leitung abfällt, sodass auf der Auflagefläche liegendes Material schwerkraftbedingt in Richtung der Leitung bewegt wird. Die Auflagefläche umfasst des Weiteren beispielsweise eine Mehrzahl von Stufen auf, die in Richtung der Leitung abfallend angeordnet sind. Der Brennstoff wird vorzugsweise mechanisch mittels eines oder mehrerer Schieber oder pneumatisch mittels Druckluft oder durch nachdrückenden Brennstoff (gefördert bspw. durch Schnecken) entlang der Auflagefläche bewegt. Eine Bewegung des Brennstoffs entlang der Auflagefläche in Richtung der Leitung sorgt für eine im Wesentlichen gleichmäßige Umsetzung des Brennstoffs, sodass dieser vorzugsweise beim Eintritt in die Leitung vollständig umgesetzt ist.

Die Behandlungsbereiche sind vorzugweise räumlich voneinander getrennt an der Leitung angeordnet. Die Anordnung von mindestens zwei Behandlungsbereichen an der Leitung bietet den Vorteil, dass jeder der Behandlungsbereiche relativ klein ausgebildet werden kann, sodass die Herstellung und die Montage des Behandlungsbereichs an der Leitung deutlich vereinfacht wird. Des Weiteren bieten eine Mehrzahl von Behandlungsbereichen an der Leitung die Möglichkeit, bei Bedarf einen oder mehrere Behandlungsbereiche zu aktivieren oder zu deaktivieren, um beispielsweise die Temperaturverteilung oder die Heißgaszusammensetzung bzw. den Schadstoffgehalt in der Leitung zu beeinflussen. Außerdem ist es möglich, die Behandlungsbereiche über eine oder mehrerer Brennstofffördereinrichtungen oder Dosierungen mit identischen oder unterschiedlichen Brennstoffen zu versorgen.

Gemäß einer Ausführungsform, die nicht Teil der beanspruchten Erfindung ist, sind zumindest zwei der Behandlungsbereiche entlang der Erstreckung der Leitung versetzt zueinander oder im Wesentlichen auf dem gleichen Höhenniveau an der Leitung angeordnet. Beispielsweise sind die Behandlungsbereiche im Wesentlichen identisch ausgebildet.

Die zumindest zwei Behandlungsbereiche sind gemäß einer weiteren Ausführungsform, die nicht Teil der beanspruchten Erfindung ist, an gegenüberliegenden Seiten an der Leitung angebracht. Vorzugsweise strömt das Gemisch aus Heißgas und Rohmaterial zwischen den gegenüberliegenden Behandlungsbereichen hindurch und wird gleichmäßig erwärmt. Diese Anordnung der Behandlungsbereiche sorgt für eine gleichmäßige Strömung des Heißgases und des Rohmaterials durch die Leitung. Die Behandlungsbereiche sind beispielsweise derart angeordnet, dass eine ungleichmäßige Strömung durch die Leitung erzeugt wird, sodass eine Durchmischung des Gemisches aus Heißgas und Rohmaterial erreicht wird.

Gemäß einer weiteren Ausführungsform sind die Behandlungsbereiche umfangsmäßig um die Leitung angebracht und bilden insbesondere einen Ring aus. Jeder der Behandlungsbereiche weist einen Brennraum auf, in dem die Behandlung des Brennstoffs im Wesentlichen stattfindet. Der Brennraum mündet in die Leitung. Die Behandlungsbereiche sind derart umfangsmäßig nebeneinander an der Leitung angebracht, dass sie insbesondere einen im Wesentlichen geschlossenen ringförmigen Brennraum um die Leitung ausbilden.

Gemäß einer weiteren Ausführungsform sind die Behandlungsbereiche des Brennstoffs derart an der Leitung angebracht, dass zumindest ein Teil der mit dem Rohmaterial vermischten Heißgase in den Behandlungsbereich gelangt und dort mit dem Brennstoff in Kontakt kommt, der dadurch getrocknet und/oder zumindest teilweise entgast und/oder zumindest teilweise umgesetzt wird.

Der Brennraum ist vorzugsweise derart an der Leitung angebracht, dass ein Teil der mit dem Rohmaterial vermischten Heißgase beispielsweise nach Art einer Kehrströmung und/oder der Strahlungswärme aus der Leitung in den Brennraum gelangt und dort mit dem Brennstoff in Kontakt kommt, der dadurch getrocknet und/oder teilweise entgast und/oder wenigstens teilweise umgesetzt wird. Vorteilhafterweise werden zur Behandlung des Brennstoffs weitere verbrennungsfördernde Gase dem Brennraum zugeführt, sodass die wenigstens teilweise Umsetzung des Brennstoffs intensiviert wird.

Gemäß einer weiteren Ausführungsform weist die Anlage zumindest eine Transportvorrichtung zum Transportieren des Brennstoffs in die Behandlungsbereiche auf. Eine solche Transportvorrichtung umfasst beispielsweise eine Transportschnecke, einen Schieber, einen Schubboden oder einen Kettenförderer. Jedem Behandlungsbereich ist vorzugsweise eine Transportvorrichtung zugeordnet, sodass eine Zufuhr unterschiedlicher Brennstoffe zu unterschiedlichen Behandlungsbereichen möglich ist. Beispielsweise ist eine Unterschubfeuerung an zumindest einem Behandlungsbereich vorgesehen, wobei Brennstoff von unten, beispielsweise mittels einer Transportschnecke, in den Behandlungsbereich transportiert wird und in dem Behandlungsbereich ein Brennstoffbett ausbildet. Das Brennstoffbett wird vorzugsweise von sauerstoffhaltiger Verbrennungsluft überströmt und zumindest teilweise verbrannt, wobei der verbrannte Brennstoff von der Strömung des Gemisches aus Heißgas und Rohmaterial erfasst wird. Der nachfolgende Transport von Brennstoff sorgt für eine Bewegung des Brennstoffs entlang der Auflagefläche.

An der Leitung ist gemäß einer weiteren Ausführungsform zumindest ein Mittel zur Zuführung von Brennstoffen, insbesondere zur direkten Zufuhr von Brennstoffen, in die Leitung angebracht. Die Mittel umfassen beispielsweise eine Rohrleitung oder eine Schurre. Der Brennstoff wird über die Mittel direkt in die Leitung aufgegeben und innerhalb der Leitung umgesetzt. Vorzugsweise sind die Mittel zur Zuführung von Brennstoffen stromabwärts zumindest einem, insbesondere jedem der Behandlungsbereiche angeordnet. Die Zuführung von Brennstoffen in die Leitung dient der Wärmezufuhr zusätzlich zu den Behandlungsbereichen.

Gemäß einer weiteren Ausführungsform sind an der Leitung und oder zumindest einem Behandlungsbereich des Brennstoffs Mittel zur Zuführung von sauerstoffhaltiger Verbrennungsluft angebracht. Bei der sauerstoffhaltigen Verbrennungsluft handelt es sich beispielsweise um Kühlerabluft, die stromabwärts des Kühlers einer Zementherstellungsanlage abgezweigt und der Leitung zugeführt wird. Die sauerstoffhaltige Verbrennungsluft umfasst des Weiteren beispielsweise mit Sauerstoff angereicherte Umgebungsluft. Beispielsweise werden Sauerstoff oder mit Sauerstoff angereicherte Umgebungsluft getrennt von der Kühlerabluft der Leitung zugeführt. Vorzugsweise ist das zumindest eine Mittel zur Zuführung von sauerstoffhaltiger Verbrennungsluft in Strömungsrichtung des Heißgases vor den Behandlungsbereichen angebracht.

An der Leitung und/oder an wenigstens einem Behandlungsbereich für den Brennstoff und/oder in einem Bereich der Vorwärmeinrichtung für das Rohmaterial ist gemäß einer weiteren Ausführungsform eine Messeinrichtung zum Ermitteln von Schadstoffen, insbesondere Stickoxide, Dioxine und/oder Furane, angeordnet. Die Messeinrichtung ist vorzugsweise stromabwärts der Behandlungsbereiche angebracht. Insbesondere sind eine Mehrzahl von Messeinrichtungen an der Leitung angebracht, wobei stromabwärts jedes Behandlungsbereichs eine Messeinrichtung angeordnet ist. Vorzugsweise sind stromabwärts der Behandlungsbereiche Mittel zur Zufuhr von schadstoffreduzierenden Stoffen in die Leitung vorgesehen.

Gemäß einer weiteren Ausführungsform ist eine Steuerungs-/Regelungseinrichtung vorgesehen, die mit der Messeinrichtung in Verbindung steht und derart ausgebildet ist, dass sie in Abhängigkeit eines mit der Messeinrichtung ermittelten Schadstoffgehalts die Zufuhr von Rohmaterial und/oder die Zufuhr von Brennstoffen und/oder die Zufuhr von sauerstoffhaltiger Verbrennungsluft und/oder die Zufuhr von schadstoffreduzierenden Stoffen und/oder die Zufuhr von Heißgasen in die Anlage steuert/regelt. Beispielsweise werden bei einem mittels der Messeinrichtung ermittelten erhöhten Schadstoffgehalt eine oder mehrere Behandlungsbereiche deaktiviert oder die Zufuhrmenge an Brennstoff wird reduziert. Dies ermöglicht eine gezielte Reaktion auf einen erhöhten Schadstoffgehalt in der Leitung, wobei ein hoher Schadstoffgehalt über einen langen Zeitraum zuverlässig vermieden wird.

Gemäß einer weiteren Ausführungsform weist der in Strömungsrichtung vordere Behandlungsbereich des Brennstoffs einen Brennstoff auf, der einen geringeren Heizwert hat, als ein Brennstoff eines weiteren Behandlungsbereichs für Brennstoff. Der in Strömungsrichtung des Heißgases vordere Behandlungsbereich ist an dem wärmsten Bereich der Leitung angeordnet. Die Heißgase des Drehrohrofens beispielsweise einer Zementherstellungsanlage strömen zuerst an dem vordersten Behandlungsbereich entlang. Dies ermöglicht eine im Wesentlichen vollständige Umsetzung eines Brennstoffs mit einem geringen Heizwert, wobei stromabwärts des vordersten Behandlungsbereichs Brennstoffe mit höherem Heizwert umgesetzt werden.

An der Leitung und/oder an wenigstens einem Behandlungsbereich für den Brennstoff und/oder der Vorwärmeinrichtung für das Rohmaterial ist gemäß einer weiteren Ausführungsform eine Temperaturmesseinrichtung zum Ermitteln der Temperatur innerhalb der Leitung angeordnet und eine Steuerungs-/Regelungseinrichtung vorgesehen, die mit der Temperaturmesseinrichtung in Verbindung steht und derart ausgebildet ist, dass sie in Abhängigkeit eines mit der Temperaturmesseinrichtung ermittelten Temperatur die Zufuhr von Rohmaterial und/oder die Zufuhr von Brennstoffen und/oder die Zufuhr von sauerstoffhaltiger Verbrennungsluft und/ oder die Zufuhr von Heißgasen in die Anlage steuert/regelt. Vorzugsweise ist stromabwärts zumindest einer der Behandlungsbereiche eine Abluftleitung an der Leitung angebracht, die zur Abführung eines Teils des Gemisches aus Rohmaterial und Heißgas aus der Leitung dient. In Abhängigkeit der mittels der Temperaturmesseinrichtung gemessenen Temperatur des Inneren der Leitung wird das Rohmaterial-Heißgas-Gemisch aus der Leitung abgeführt. Dies verhindert insbesondere eine Beschädigung auf der Leitung folgender Komponenten der beispielsweise Zementherstellungsanlage aufgrund zu hoher Temperaturen. Bei der Steuerungs-/ Regelungseinrichtung handlet es sich beispielweise um die mit der Schadstoffmesseinrichtung in Verbindung stehende Steuerungs-/ und Regelungseinrichtung oder um eine weitere separate Steuerungs-/ Regelungseinrichtung.

Die Erfindung betrifft des Weiteren ein Verfahren zur thermischen Behandlung von flugfähigem Rohmaterial, insbesondere Zementrohmehl oder Mineralstoffe, wobei das Rohmaterial in eine von heißen Gasen durchströmte Leitung eingeführt und durch die Heißgase in der Leitung thermisch behandelt wird. Der Brennstoff wird in zumindest zwei mit der Leitung verbundenen Behandlungsbereichen mindestens teilweise umgesetzt und die in den Behandlungsbereichen erzeugte Wärme zumindest teilweise der Leitung zugeführt.

Die mit Bezug auf die Anlagen zur thermischen Behandlung von flugfähigem Rohmaterial beschriebenen Ausführungen treffen in verfahrensmäßiger Entsprechung auch auf das Verfahren zur thermischen Behandlung von flugfähigem Rohmaterial zu.

Gemäß einer Ausführungsform gelangt zumindest ein Teil der mit dem Rohmaterial vermischten Heißgase und/oder der Strahlungswärme der Leitung in den Behandlungsbereich und kommt dort mit dem Brennstoff in Kontakt, der dadurch getrocknet und/oder zumindest teilweise entgast und/oder zumindest teilweise umgesetzt wird.

Der Brennstoff liegt auf einer Auflagefläche des wenigstens einen Behandlungsbereichs auf und wird anschließend mechanisch und/oder pneumatisch und/oder schwerkraftbedingt von der Auflagefläche in die Leitung gefördert.

Die Behandlungsbereiche sind gemäß einer Ausführungsform entlang der Erstreckung der Leitung versetzt zueinander angeordnet und dem in Strömungsrichtung des Rohmaterials vordersten Behandlungsbereich wird ein Brennstoff zugeführt, der einen geringeren Heizwert aufweist als der Brennstoff, welcher einem folgenden Behandlungsbereich zugeführt wird.

Gemäß einer Ausführungsform wird der Leitung und/oder dem Behandlungsbereich sauerstoffhaltige Verbrennungsluft zugeführt. Insbesondere wird die Menge des mit dem Rohmaterial vermischten Heißgases, insbesondere das mit dem Brennstoff in Kontakt kommt, durch das Zuführen einer sauerstoffhaltigen Verbrennungsluft in die Leitung und/oder dem Behandlungsbereich eingestellt.

An der Leitung ist gemäß einer weiteren Ausführungsform stromabwärts zumindest einer der Behandlungsbereiche und/oder im Vorwärmer eine Messeinrichtung zum Ermitteln eines Schadstoffgehalts, insbesondere Stickoxide, Dioxine und/oder Furane, angeordnet, wobei in Abhängigkeit eines mit der Messeinrichtung ermittelten Schadstoffgehalts die Zufuhr von Rohmaterial und/oder die Zufuhr von Brennstoffen und/oder die Zufuhr von sauerstoffhaltiger Verbrennungsluft und/oder die Zufuhr schadstoffreduzierenden Stoffen in die Anlage gesteuert/geregelt/eingestellt wird. Vorzugsweise ist stromabwärts zumindest einer der Behandlungsbereiche eine Temperaturmesseinrichtung zur Ermittlung der Temperatur in die Leitung angeordnet, wobei in Abhängigkeit eines mit der Temperaturmesseinrichtung ermittelten Temperatur die Zufuhr von Rohmaterial und/oder die Zufuhr von Brennstoffen und/oder die Zufuhr von sauerstoffhaltiger Verbrennungsluft und/oder die Zufuhr von Heißgasen in die Anlage gesteuert/geregelt/eingestellt wird.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Ansicht einer Anlage zur Herstellung von Zementklinker gemäß einem Ausführungsbeispiel.
- Fig. 2: zeigt eine schematische Ansicht einer Anlage zur thermischen Behandlung von flugfähigem Rohmaterial gemäß einem Ausführungsbeispiel.
- Fig. 3: zeigt eine schematische Ansicht einer Anlage zur thermischen Behandlung von flugfähigem Rohmaterial gemäß einem weiteren Ausführungsbeispiel.

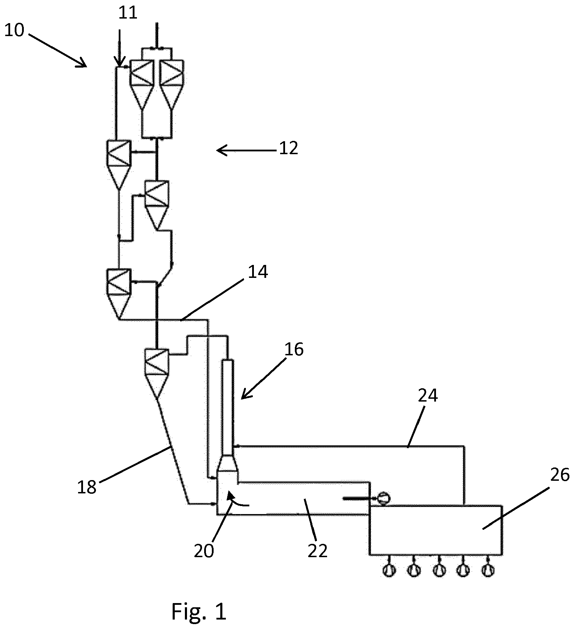

Fig. 1 zeigt eine Anlage zur Herstellung von beispielsweise Zementklinker mit einem mehrstufigen Vorwärmer 12 zum Vorwärmen von Zementrohmehl 11, einem Calcinator 16 zum Vorcalcinieren des vorgewärmten Zementrohmehls 14, einen Ofen 22 zum Brennen des vorcalcinierten Zementrohmehls 18 zu Zementklinker und einen Kühler 26 zum Kühlen des Zementklinkers. Die im Ofen 22 entstehenden Heißgase 20 durchströmen zunächst den Calcinator 16 und anschließend den Vorwärmer 12. Ferner wird eine im Kühler 22 entstehende Kühlerabluft 24 als Verbrennungsluft im Calcinator 16 genutzt.

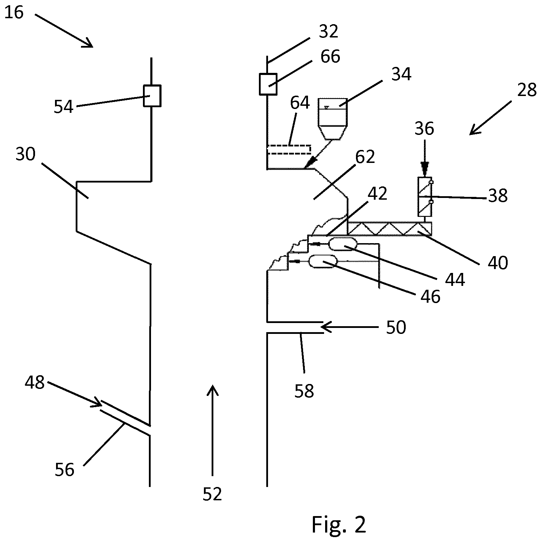

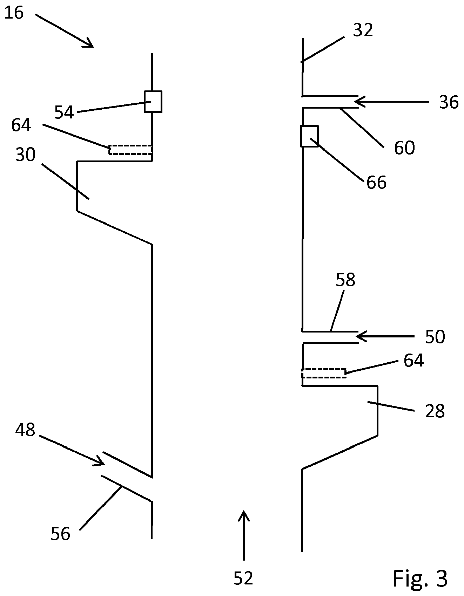

Anhand der Figuren 2 und 3 werden verschiedene Ausführungsbeispiele für die Ausbildung des Calcinators 16 gezeigt. Diese Ausführungsbeispiele können aber auch weitere Anlagen zur thermischen Behandlung oder chemischen Umsetzung von flugfähigem Rohmaterial, wie beispielsweise der Erzreduktion, betreffen und sind daher nicht auf einen Calcinator beschränkt.

Fig. 2 zeigt eine Anlage 16 zur thermischen Behandlung eines flugfähigen Rohmaterials, insbesondere einen Calcinator. Die Anlage weist ein sich im Wesentlichen vertikal erstreckende Leitung 32 auf, an dem ein erster Behandlungsbereich 28 und ein zweiter Behandlungsbereich 30 angebracht sind. Der Einfachheit halber ist lediglich einer der Behandlungsbereiche 28, 30 im Detail dargestellt, wobei der zweite Behandlungsbereich 30 beispielsweise im Wesentlichen dem ersten Behandlungsbereich 28 entspricht. Die Behandlungsbereiche 28, 30 bilden radiale Ausbuchtungen der Leitung 32 und weisen jeweils eine Brennraum 62 auf, der jeweils hin zu der Leitung 32 offen ausgebildet ist und in dem Inneren der Leitung 32 mündet. Der im Detail dargestellte erste Behandlungsbereich 28 weist eine im Wesentlichen horizontale Auflagefläche 42 auf, die durch einen Tisch und zwei sich in Richtung der Leitung 32 anschließende Stufen gebildet wird. Weiterhin sind Mittel 38 zur Zugabe von Brennstoff 36 vorgesehen, die im dargestellten Ausführungsbeispiel Pendelklappen und eine Schnecke 40 umfassen.

Über die Mittel 38 wird der Brennstoff 36 auf die Auflagefläche 42 geschoben. Das thermisch zu behandelnde Rohmaterial 48 wird in einem unteren Bereich der Leitung 32 über die Mittel 56 zugeführt. Weiterhin kann der Leitung 32 und/oder wenigstens einem Behandlungsbereich 28 über Mittel 58 sauerstoffhaltige Verbrennungsluft 50 zugeführt werden. Die sauerstoffhaltige Verbrennungsluft ist beispielswiese Kühlerabluft 24 gemäß Fig. 1 oder mit Sauerstoff angereicherte Umgebungsluft. Es ist ebenfalls denkbar, eine von dem Mittel 58 getrennte Sauerstoffleitung zur Leitung von Sauerstoff in die Leitung 32 und/oder wenigstens einem Behandlungsbereich 28 anzuordnen, sodass zusätzlich zu der Kühlerabluft 24 Sauerstoff oder mit Sauerstoff angereicherte Umgebungsluft in die Leitung und/oder wenigstens einem Behandlungsbereich 28 eingeleitet wird. Der Brennraum 62 ist derart an die Leitung 32 angeschlossen, dass ein Teil der mit dem Rohmaterial 48 vermischten Heißgase 52 beispielsweise nach Art einer Kehrströmung in den Brennraum 62 gelangt und dort mit dem auf der Auflagefläche 42 verweilenden Brennstoff 36 in Kontakt kommt, der dadurch getrocknet und/oder teilweise entgast und/oder wenigstens teilweise umgesetzt wird. Nach einer ausreichenden Verweilzeit auf dem Tisch der Auflagefläche 42 wird der Brennstoff auf die erste Stufe geschoben, indem neuer Brennstoff über die Schnecke 40 nachgeschoben wird. Zum Transport des Brennstoffs von der ersten Stufe auf die sich daran anschließende Stufen bzw. zum Abwurf des Brennstoffs 36 von den Stufen in die Leitung 32 sind im Bereich der Stufen Luftstoßvorrichtungen 44, 46 vorgesehen. Es könnten aber auch Gebläse, Schieber oder Stößel zur Anwendung kommen. Durch eine nicht näher dargestellte Steuerung werden die Schnecke 40 und die Luftstoßgeräte 44, 46 aufeinander abgestimmt betätigt, sodass der Brennstoff 36 eine ausreichende Zeit im Brennraum 62 verweilt und dort in der gewünschten Art und Weise wenigstens teilweise umgesetzt wird.

Weiterhin kann ein Bunker 34 für inertes Material vorgesehen werden, um beispielsweise bei einem plötzlichen Anlagenstopp den noch laufenden Brennstoffumsatz durch ein Überdecken des Brennstoffbetts mit inertem Material (beispielsweise Sand oder Kalksteinmehl) zu verlangsamen oder weitestgehend zum Erliegen zu bringen.

Der in die Leitung 32 abgeworfene Brennstoff wird vom Heißgas 52 mitgerissen und weiter umgesetzt bzw. verbrannt. Der Effekt der "Kehrströmung", bei dem der Teil der in der Leitung 32 nach oben strömenden Heißgase 52 in den Brennraum 62 gelangt, tritt ein.

In dem Ausführungsbeispiel der Fig. 2 sind der erste Behandlungsbereich 28 und der zweite Behandlungsbereich 30 auf einem im Wesentlichen gleichen Höhenniveau an der Leitung 32 angebracht. Die Behandlungsbereiche 28, 30 sind ferner an gegenüberliegenden Seiten der Leitung 32 angebracht, sodass sich die Brennräume 62 der Behandlungsbereiche 28, 30 gegenüberliegen und das mit dem Rohmaterial 48 vermischte Heißgas 52 zwischen dem ersten und dem zweiten Behandlungsbereich hindurchströmt.

In Strömungsrichtung des Gemisches aus Heißgas 52 und Rohmaterial 48 vor den Behandlungsbereichen 28, 30 sind das Mittel 56 zur Zuführung von Rohmaterial 48 und das Mittel 58 zur Zuführung von sauerstoffhaltiger Verbrennungsluft 50 angeordnet. Bei den Mitteln 56, 58 handelt es sich beispielsweise um Rohrleitungen, die in die Steigleitung 32 münden und beispielsweise mit einer Klappe zum Verhindern oder Dosieren der Luft- bzw. Materialströmung in die Leitung 32 versehen sind.

Stromabwärts der Behandlungsbereiche 28, 30 ist eine Messeinrichtung 54 in dem Inneren der Leitung 32 angebracht. Dieser Messpunkt kann sich beispielsweise auch im Vorwärmbereich befinden, sodass eine Messung in der Leitung nicht zwingend erforderlich ist. Die Messeinrichtung 54 ist zum Ermitteln des Gehalts von Schadstoffen in der Leitung 32 ausgebildet. Insbesondere ermittelt die Messeinrichtung 54 den Gehalt von Stickoxiden, Dioxinen und/ oder Furanen in dem Heißgasstrom stromabwärts der Behandlungsbereiche 28, 30. Ebenfalls Stromabwärts der Behandlungsbereiche 28, 30 ist eine Temperaturmesseinrichtung 66 an der Leitung angebracht. Mittels der Temperaturmesseinrichtung 66 ist die Temperatur des Heißgasstroms bestimmbar. Optional ist stromabwärts der Behandlungsbereiche 28, 30 eine Abluftleitung 64 angebracht, die der Abführung zumindest eines Teils des Gemisches aus Rohmaterial und Heißluft aus der Leitung 32 dient.

Im Betrieb der Anlage 16 zur thermischen Behandlung von flugfähigem Rohmaterial 48 durchströmt das Gemisch aus Heißgas 52 und Rohmaterial die Leitung 32 von unten nach oben. Die mittels der Behandlungsbereiche 28 und 30 über die Steigung der Leitung 32 aufrecht erhaltene Temperatur von etwa 500 - 1300°C, vorzugsweise 800-1200°C, sorgt für eine Entsäuerung des Rohmaterials. Die dafür erforderliche Wärme kann gezielt durch das Betreiben einer oder mehrerer der Behandlungsbereiche 28, 30 eingestellt werden. Die Anordnung einer Mehrzahl von Behandlungsbereiche 28, 30 an der Leitung 32 ermöglicht des Weiteren eine kleinere Bauweise der Behandlungsbereiche 28, 30, sodass diese einfacher herstellbar und einfacher an die Leitung 32 befestigbar sind. Außerdem ist es möglich, die Behandlungsbereiche mit unterschiedlichen Brennstoffen zu befüllen, wobei die Brennstoffe beispielsweise unterschiedliche Heizwerte aufweisen. Dadurch wird beispielsweise eine optimale Verbrennung der unterschiedlichen Brennstoffe in jedem der Behandlungsbereiche realisiert. Mittels der Messeinrichtung ist der Schadstoffgehalt innerhalb des Heißgases bestimmbar, sodass in Abhängigkeit des ermittelten Schadstoffgehalts die für die Verbrennung wesentlichen Parameter, wie beispielsweise die Menge an sauerstoffhaltiger Verbrennungsluft 50, die Brennstoffmenge oder die Menge an Rohmaterial 48, einstellbar ist. Mittels der Temperaturmesseinrichtung 66 wird die Temperatur innerhalb der Leitung 32 bestimmt, wobei beispielsweise in Abhängigkeit der ermittelten Temperatur die Abluftleitung 64 geöffnet wird und ein Teil des Gemisches aus Rohmaterial und Heißluft aus der Leitung 32 abgeführt wird, um die Temperatur in der Leitung zu reduzieren. Es ist ebenfalls denkbar in Reaktion auf eine ermittelte erhöhte Temperatur in der Leitung 32 die Brennstoffzufuhr, die Zufuhr von sauerstoffhaltiger Verbrennungsluft und/oder die Zufuhr von Heißgasen in die Anlage zu steuern/ regeln. Weiterhin ist es denkbar, zumindest einem Behandlungsbereich darin erzeugte Wärme, insbesondere Heißgas, zu entnehmen und zur Energiegewinnung zu nutzen.

Fig. 3 zeigt ein weiteres Ausführungsbeispiel einer Anlage 16 zur thermischen Behandlung von flugfähigem Rohmaterial 48. Die Anlage 16 entspricht im Wesentlichen der in Fig. 2 gezeigten Anlage, wobei der erste Behandlungsbereich 28 der Anlage 16 der Fig. 3 in Strömungsrichtung vor dem zweiten Behandlungsbereich 30 angeordnet ist. Das Mittel 58 zur Zuführung von sauerstoffhaltiger Verbrennungsluft 50 ist stromabwärts des ersten Behandlungsbereichs 28 und stromaufwärts des zweiten Behandlungsbereichs 30 angeordnet.

In Strömungsrichtung hinter dem zweiten Behandlungsbereich 30 ist ein Mittel 60 zur Zugabe von Brennstoff 35 angebracht. Dabei handelte sich beispielsweise um eine Rohrleitung oder eine Transportvorrichtung, wie eine Transportschnecke, die in dem Inneren der Leitung 32 mündet. Es ist ebenfalls denkbar, einen separaten Brenner in der Leitung anzuordnen, um zusätzliche Wärme zu erzeugen. Die Behandlungsbereiche 28, 30 weisen beispielsweise einen Aufbau auf, der dem ersten Behandlungsbereich 28 der Fig. 2 entspricht.

Der erste Behandlungsbereich 28 ist im unteren Bereich der Leitung 32 näher zu dem Drehrohrofen 22 gemäß Fig. 1 angeordnet und somit in einem relativ zu der Position der zweiten Behandlungsbereich 30 wärmeren Bereich der Leitung 32 angeordnet. Eine solche Anordnung ermöglicht den Einsatz von Brennstoffen mit geringerem Heizwert in dem ersten Behandlungsbereich 28, wobei Brennstoffe mit einem höheren Heizwert in dem zweiten Behandlungsbereich 30 umgesetzt werden können. So ist eine optimale Verbrennung der Brennstoffe in dem ersten und dem zweiten Behandlungsbereich möglich. Je nach Bedarf ist es ebenfalls möglich, zusätzlich oder alternativ zu dem ersten und/oder dem zweiten Behandlungsbereich 28, 30 Brennstoff 36 über das Mittel 60 in die Leitung aufzugeben, wobei der Brennstoff 36 in der Leitung 32 umgesetzt wird. Bei dem Brennstoff 36, der über das Mittel 60 direkt in die Leitung 32 aufgegeben wird, handelt es sich beispielweise um Lösungsmittel und/oder Altöle und/oder Fluff.

Fig. 3 zeigt ebenfalls eine Messeinrichtung 54 zum Ermitteln des Schadstoffgehalts sowie eine Temperaturmesseinrichtung 66. Die Temperaturmesseinrichtung 66 ist stromabwärts des ersten und des zweiten Behandlungsbereichs 28, 30 angeordnet, wobei jedem Behandlungsbereich 28, 30 eine Abluftleitung 64 zugeordnet ist, die jeweils stromabwärts der Behandlungsbereiche angeordnet ist. Es ist ebenfalls denkbar, jedem Behandlungsbereich 28, 30 eine Temperaturmesseinrichtung 66 nachzuschalten, sodass die Temperatur im Anschluss an jeden Behandlungsbereich 28, 30 ermittelt werden kann.

### Bezugszeichenliste

- 10: Anlage zur Herstellung von Zementklinker
- 12: Vorwärmer
- 14: vorgewärmtes Rohmaterial
- 16: Calcinator
- 18: vorcalciniertes Rohmaterial
- 20: Heißgase des Drehrohrofens
- 22: Drehrohrofen
- 24: Kühlerabluft
- 26: Kühler
- 28: erster Behandlungsbereich
- 30: zweiter Behandlungsbereich
- 32: Leitung
- 34: Bunker
- 36: Brennstoff
- 38: Mittel zur Zugabe von Brennstoff
- 40: Transportschnecke
- 42: Auflagefläche
- 44: Luftstoßvorrichtung
- 46: Luftstoßvorrichtung
- 48: vorgewärmtes Rohmaterial
- 50: sauerstoffhaltige Verbrennungsluft / Kühlerabluft
- 52: Heißgas
- 54: Messeinrichtung
- 56: Mittel zur Zuführung von Rohmaterial
- 58: Mittel zur Zuführung von sauerstoffhaltiger Verbrennungsluft
- 60: Mittel zur Zugabe von Brennstoff
- 62: Brennraum
- 64: Abluftleitung
- 66: Temperaturmesseinrichtung

## Patentansprüche

1. Anlage (10) zur thermischen Behandlung von flugfähigem Rohmaterial (14), insbesondere Zementrohmehl und/oder mineralische Produkte, mit einer von Heißgasen (52) durchströmten Leitung (32) und zumindest einem Mittel (56) zur Zugabe des Rohmaterials (48),
**dadurch gekennzeichnet, dass**
die Anlage (10) zumindest zwei Behandlungsbereiche (28, 30) zur Behandlung von Brennstoffen (36) aufweist, die mit der Leitung (32) in Verbindung stehen, sodass zumindest ein Teil der in den Behandlungsbereichen (28, 30) erzeugten Wärme in die Leitung (32) gelangt, wobei zumindest einer der Behandlungsbereiche (28, 30) eine Auflagefläche (42) zur Aufnahme des Brennstoffs (36), aufweist und wobei der Brennstoff (36) mittels Schwerkraft, pneumatisch oder mechanisch entlang der Auflagefläche (42) bewegbar ist, wobei die Behandlungsbereiche (28, 30) jeweils einen Brennraum (62) aufweisen, der in die Leitung (32) mündet.

2. Anlage (10) nach einem der vorangehenden Ansprüche, wobei die Behandlungsbereiche (28, 30) umfangsmäßig um die Leitung (32) angebracht sind und insbesondere einen Ring ausbilden.

3. Anlage (10) nach einem der vorangehenden Ansprüche, wobei die Behandlungsbereiche (28, 30) des Brennstoffs (36) derart an die Leitung (32) angebracht sind, dass zumindest ein Teil der mit dem Rohmaterial (48) vermischten Heißgase (52) in die Behandlungsbereiche (28, 30) gelangt und dort mit dem Brennstoff (36) in Kontakt kommt, der dadurch getrocknet und/oder zumindest teilweise entgast und/oder zumindest teilweise umgesetzt wird.

4. Anlage (10) nach einem der vorangehenden Ansprüche, wobei die Anlage (10) zumindest eine Transportvorrichtung (40) zum Transportieren des Brennstoffs (36) in die Behandlungsbereiche (28, 30) aufweist.

5. Anlage (10) nach einem der vorangehenden Ansprüche, wobei an der Leitung (32) zumindest ein Mittel (60) zur Zuführung von Brennstoffen (36), insbesondere zur direkten Zufuhr von Brennstoff (36), in die Leitung (32) angebracht ist.

6. Anlage (10) nach einem der vorangehenden Ansprüche, wobei an der Leitung (32) und/oder dem Behandlungsbereich (28, 30) des Brennstoffs (36) Mittel (58) zur Zuführung von sauerstoffhaltiger Verbrennungsluft (50) angebracht sind.

7. Anlage (10) nach einem der vorangehenden Ansprüche, wobei an der Leitung (32) und/oder an wenigstens einem Behandlungsbereich (28, 30) für den Brennstoff (36) und/oder im Vorwärmer (12) eine Messeinrichtung (54) zum Ermitteln von Schadstoffen, insbesondere Stickoxide, Dioxine und/oder Furane, angeordnet ist.

8. Anlage (10) nach Anspruch 10, wobei eine Steuerungs-/ Regelungseinrichtung vorgesehen ist, die mit der Messeinrichtung (54) in Verbindung steht und derart ausgebildet ist, dass sie in Abhängigkeit eines mit der Messeinrichtung (54) ermittelten Schadstoffgehalts, die Zufuhr von Rohmaterial (48) und/oder die Zufuhr von Brennstoffen (36) und/oder die Zufuhr von sauerstoffhaltiger Verbrennungsluft (50) und/oder die Zufuhr von schadstoffreduzierenden Stoffen und/oder die Zufuhr von Heißgasen (52) in die Anlage (10) steuert/regelt.

9. Anlage (10) nach einem der vorangehenden Ansprüche, wobei der in Strömungsrichtung vordere Behandlungsbereich (28) des Brennstoffs (36) einen Brennstoff (36) aufweist, der einen geringeren Heizwert aufweist als ein Brennstoff (36) eines weiteren Behandlungsbereichs (30) für Brennstoff (36).

10. Anlage (10) nach einem der vorangehenden Ansprüche, wobei an der Leitung (32) und/oder an wenigstens einem Behandlungsbereich (28, 30) für den Brennstoff (36) und/oder im Vorwärmer (12) eine Temperaturmesseinrichtung (66) zum Ermitteln der Temperatur der Heißgase angeordnet ist und eine Steuerungs- / Regelungseinrichtung vorgesehen ist, die mit der Temperaturmesseinrichtung (66) in Verbindung steht und derart ausgebildet ist, dass sie in Abhängigkeit eines mit der Temperaturmesseinrichtung (66) ermittelten Temperatur, die Zufuhr von Rohmaterial (48) und/oder die Zufuhr von Brennstoffen (36) und/oder die Zufuhr von sauerstoffhaltiger Verbrennungsluft (50) und/oder die Zufuhr von Heißgasen (52) in die Anlage (10) steuert/regelt.

11. Verfahren zur thermischen Behandlung von flugfähigem Rohmaterial (48), insbesondere Zementrohmehl und/oder mineralische Produkte, wobei das Rohmaterial (48) in eine von heißen Gasen durchströmte Leitung (32) eingeführt und durch die Heißgase (52) und/oder der Strahlungswärme in der Leitung (32) thermisch behandelt wird,
**dadurch gekennzeichnet, dass**
Brennstoff (36) in zumindest zwei mit der Leitung (32) verbundenen Behandlungsbereichen(28, 30) mit jeweils einem in die Leitung (32) mündenden Brennraum (62) wenigstens teilweise umgesetzt wird und die in den Behandlungsbereichen (28, 30) erzeugte Wärme zumindest teilweise der Leitung (32) zugeführt wird, wobei der Brennstoff (36) auf einer Auflagefläche (42) des wenigstens einen Behandlungsbereiches (28, 30) aufliegt und anschließend mechanisch und/oder pneumatisch und/oder schwerkraftbedingt von der Auflagefläche (42) in die die Leitung (32) gefördert wird.

12. Verfahren nach Anspruch 11, wobei zumindest ein Teil der mit dem Rohmaterial (48) vermischten Heißgase (52) in den Behandlungsbereich (28, 30) gelangt und dort mit dem Brennstoff (36) in Kontakt kommt, der dadurch getrocknet und/oder zumindest teilweise entgast und/oder zumindest teilweise umgesetzt wird.

13. Verfahren nach einem der Ansprüche 11 - 12, wobei die Behandlungsbereiche (28, 30) entlang der Erstreckung der Leitung (32) versetzt zueinander angeordnet sind und dem in Strömungsrichtung des Rohmaterials (14) vordersten Behandlungsbereich (28) ein Brennstoff (36) zugeführt wird, der einen geringeren Heizwert aufweist als der Brennstoff, welcher einem folgenden Behandlungsbereich (30) zugeführt wird.

14. Verfahren nach einem der Ansprüche 11 - 13, wobei der Leitung (32) und/oder wenigstens einem der Behandlungsbereiche (28, 30) sauerstoffhaltige Verbrennungsluft (50) zugeführt wird.

15. Verfahren nach einem der Ansprüche 11 - 14, wobei an der Leitung (32) stromabwärts zumindest einer der Behandlungsbereiche (28, 30) und/oder im Vorwärmer (12) eine Messeinrichtung (54) zum Ermitteln eines Schadstoffgehalts, insbesondere Stickoxide, Dioxine und/oder Furane, angeordnet ist und in Abhängigkeit eines mit der Messeinrichtung (54) ermittelten Schadstoffgehalts die Zufuhr von Rohmaterial (48) und/oder die Zufuhr von Brennstoffen (36) und/oder die Zufuhr von sauerstoffhaltiger Verbrennungsluft (50) und/oder die Zufuhr schadstoffreduzierenden Stoffen in die Anlage (10) gesteuert/geregelt wird.

## Claims

1. Installation (10) for the thermal treatment of dispersible raw material (14), in particular cement raw meal and/or mineral products, having a line (32) through which hot gases (52) flow and at least one means (56) for adding the raw material (48), **characterized in that**
the installation (10) comprises at least two treatment regions (28, 30) for the treatment of fuels (36), which are connected to the line (32) such that at least a part of the heat generated in the treatment regions (28, 30) passes into the line (32), wherein at least one of the treatment regions (28, 30) comprises a bearing surface (42) for receiving the fuel (36), and wherein the fuel (36) is movable along the bearing surface (42) by means of gravitational force, pneumatically or mechanically, wherein the treatment regions (28, 30) each comprise a combustion chamber (62) which opens into the line (32).

2. Installation (10) according to one of the preceding claims, wherein the treatment regions (28, 30) are attached circumferentially around the line (32) and in particular form a ring.

3. Installation (10) according to one of the preceding claims, wherein the treatment regions (28, 30) for the fuel (36) are attached to the line (32) such that at least a part of the hot gases (52) which are mixed with the raw material (48) passes into the treatment regions (28, 30) and, there, comes into contact with the fuel (36), which fuel is consequently dried and/or at least partly degassed and/or at least partly converted.

4. Installation (10) according to one of the preceding claims, wherein the installation (10) comprises at least one transport apparatus (40) for transporting the fuel (36) into the treatment regions (28, 30).

5. Installation (10) according to one of the preceding claims, wherein attached to the line (32) is at least one means (60) for feeding fuels (36), in particular for feeding fuel (36) directly, into the line (32).

6. Installation (10) according to one of the preceding claims, wherein attached to the line (32) and/or to the treatment region (28, 30) for the fuel (36) are means (58) for feeding oxygen-containing combustion air (50).

7. Installation (10) according to one of the preceding claims, wherein, on the line (32) and/or on at least one treatment region (28, 30) for the fuel (36) and/or in the preheater (12), there is arranged a measuring device (54) for determining pollutants, in particular nitrogen oxides, dioxins and/or furans.

8. Installation (10) according to Claim 10, wherein provision is made of a control/regulating device which is connected to the measuring device (54) and is designed such that it controls/regulates in a manner dependent on a pollutant content determined by the measuring device (54) the feeding of raw material (48) and/or the feeding of fuels (36) and/or the feeding of oxygen-containing combustion air (50) and/or the feeding of pollutant-reducing substances and/or the feeding of hot gases (52) into the installation (10).

9. Installation (10) according to one of the preceding claims, wherein the front treatment region (28) for the fuel (36) in the flow direction has a fuel (36) which has a lower calorific value than a fuel (36) of a further treatment region (30) for fuel (36).

10. Installation (10) according to one of the preceding claims, wherein, on the line (32) and/or on at least one treatment region (28, 30) for the fuel (36) and/or in the preheater (12), there is arranged a temperature-measuring device (66) for determining the temperature of the hot gases and provision is made of a control/regulating device which is connected to the temperature-measuring device (66) and is designed such that it controls/regulates in a manner dependent on a temperature determined by the temperature-measuring device (66) the feeding of raw material (48) and/or the feeding of fuels (36) and/or the feeding of oxygen-containing combustion air (50) and/or the feeding of hot gases (52) into the installation (10).

11. Method for the thermal treatment of dispersible raw material (48), in particular cement raw meal and/or mineral products, wherein the raw material (48) is introduced into a line (32) through which hot gases flow and is thermally treated by way of the hot gases (52) and/or the radiant heat in the line (32), **characterized in that**
fuel (36) is at least partly converted in at least two treatment regions (28, 30) which are connected to the line (32) and which each have a combustion chamber (62) which opens into the line (32), and the heat generated in the treatment regions (28, 30) is at least partly fed to the line (32), wherein the fuel (36) rests on a bearing surface (42) of the at least one treatment region (28, 30) and is subsequently conveyed mechanically and/or pneumatically and/or under gravitational force from the bearing surface (42) into the line (32).

12. Method according to Claim 11, wherein at least a part of the hot gases (52) which are mixed with the raw material (48) passes into the treatment region (28, 30) and, there, comes into contact with the fuel (36), which fuel is consequently dried and/or at least partly degassed and/or at least partly converted.

13. Method according to either of Claims 11 and 12, wherein the treatment regions (28, 30) are arranged offset from one another along the extent of the line (32), and a fuel (36) is fed to the foremost treatment region (28) in the flow direction of the raw material (14), which fuel has a lower calorific value than the fuel which is fed to a treatment region (30) which follows.

14. Method according to one of Claims 11 to 13, wherein oxygen-containing combustion air (50) is fed to the line (32) and/or to at least one of the treatment regions (28, 30).

15. Method according to one of Claims 11 to 14, wherein on the line (32) downstream of at least one of the treatment regions (28, 30) and/or in the preheater (12), there is arranged a measuring device (54) for determining a pollutant content, in particular with respect to nitrogen oxides, dioxins and/or furans, and the feeding of raw material (48) and/or the feeding of fuels (36) and/or the feeding of oxygen-containing combustion air (50) and/or the feeding of pollutant-reducing substances into the installation (10) is controlled/regulated in a manner dependent on a pollutant content determined by the measuring device (54).

## Revendications

1. Installation (10) de traitement thermique d'une matière première dispersible (14), en particulier de farine crue de ciment et/ou de produits minéraux, comprenant une conduite (32) traversée par des gaz chauds (52) et au moins un moyen (56) d'ajout de la matière première (48),
**caractérisée en ce que**
l'installation (10) comprend au moins deux régions de traitement (28, 30) pour le traitement de combustibles (36), lesquelles sont en liaison avec la conduite (32), de telle sorte qu'au moins une partie de la chaleur produite dans les régions de traitement (28, 30) parvienne dans la conduite (32), au moins l'une des régions de traitement (28, 30) comprenant une surface d'appui (42) destinée à recevoir le combustible (36), et le combustible (36) étant déplaçable par gravité, de manière pneumatique ou de manière mécanique le long de la surface d'appui (42), les régions de traitement (28, 30) comprenant respectivement une chambre de combustion (62) qui débouche dans la conduite (32).

2. Installation (10) selon l'une des revendications précédentes, dans laquelle les régions de traitement (28, 30) sont montées de manière périphérique autour de la conduite (32) et forment en particulier un anneau.

3. Installation (10) selon l'une des revendications précédentes, dans laquelle les régions de traitement (28, 30) du combustible (36) sont montées sur la conduite (32) de telle sorte qu'au moins une partie des gaz chauds (52) mélangés à la matière première (48) parvienne dans les régions de traitement (28, 30) et y vienne en contact avec le combustible (36) qui est ainsi séché et/ou au moins partiellement dégazé et/ou au moins partiellement mis en réaction.

4. Installation (10) selon l'une des revendications précédentes, dans laquelle l'installation (10) comprend au moins un dispositif de transport (40) pour le transport du combustible (36) dans les régions de traitement (28, 30).

5. Installation (10) selon l'une des revendications précédentes, dans laquelle au moins un moyen (60) d'apport de combustibles (36), en particulier d'apport direct de combustible (36) dans la conduite (32) est monté sur la conduite (32).

6. Installation (10) selon l'une des revendications précédentes, dans laquelle des moyens (58) d'apport d'air de combustion (50) contenant de l'oxygène sont montés sur la conduite (32) et/ou sur la région de traitement (28, 30) du combustible (36).

7. Installation (10) selon l'une des revendications précédentes, dans laquelle un dispositif de mesure (54) servant à détecter des substances nocives, en particulier des oxydes d'azote, des dioxines et/ou des furanes est disposé sur la conduite (32) et/ou sur au moins une région de traitement (28, 30) du combustible (36) et/ou dans le dispositif de préchauffage (12).

8. Installation (10) selon la revendication 10, dans laquelle un dispositif de commande/régulation est prévu, lequel est en liaison avec le dispositif de mesure (54) et est conçu de telle sorte qu'il régule/commande, en fonction d'une teneur en substances nocives détectée à l'aide du dispositif de mesure (54), l'apport de matière première (48) et/ou l'apport de combustibles (36) et/ou l'apport d'air de combustion (50) contenant de l'oxygène et/ou l'apport de substances réduisant les substances nocives et/ou l'apport de gaz chauds (52) dans l'installation (10).

9. Installation (10) selon l'une des revendications précédentes, dans laquelle la région de traitement (28) du combustible (36) située à l'avant dans le sens d'écoulement comprend un combustible (36) qui présente une valeur calorifique plus faible que celle d'un combustible (36) d'une autre région de traitement (30) de combustible (36).

10. Installation (10) selon l'une des revendications précédentes, dans laquelle un dispositif de mesure de température (66) servant à déterminer la température des gaz chauds est disposé sur la conduite (32) et/ou sur au moins une région de traitement (28, 30) du combustible (36) et/ou dans le dispositif de préchauffage (12) et un dispositif de commande/régulation est prévu, lequel est en liaison avec le dispositif de mesure de température (66) et est conçu de telle sorte qu'il régule/commande, en fonction d'une température déterminée à l'aide du dispositif de mesure de température (66), l'apport de matière première (48) et/ou l'apport de combustibles (36) et/ou l'apport d'air de combustion (50) contenant de l'oxygène et/ou l'apport de gaz chauds (52) dans l'installation (10).

11. Procédé de traitement thermique d'une matière première dispersible (48), en particulier de farine crue de ciment et/ou de produits minéraux, la matière première (48) étant introduite dans une conduite (32) traversée par des gaz chauds et étant traitée thermiquement par les gaz chauds (52) et/ou la chaleur rayonnante dans la conduite (32),
**caractérisé en ce que**
du combustible (36) est au moins partiellement mis en réaction dans au moins deux régions de traitement (28, 30) reliées à la conduite (32) et comprenant respectivement une chambre de combustion (62) débouchant dans la conduite (32) et la chaleur produite dans les régions de traitement (28, 30) est acheminée au moins partiellement jusqu'à la conduite (32), le combustible (36) reposant sur une surface d'appui (42) de ladite au moins une région de traitement (28, 30) et étant ensuite transporté de la surface d'appui (42) à la conduite (32) de manière mécanique et/ou pneumatique et/ou par gravité.

12. Procédé selon la revendication 11, dans lequel au moins une partie des gaz chauds (52) mélangés à la matière première (48) parvient dans la région de traitement (28, 30) et y vient en contact avec le combustible (36) qui est ainsi séché et/ou au moins partiellement dégazé et/ou au moins partiellement mis en réaction.

13. Procédé selon l'une des revendications 11 et 12, dans lequel les régions de traitement (28, 30) sont disposées de manière décalée l'une par rapport à l'autre le long de l'étendue de la conduite (32) et un combustible (36) est acheminé jusqu'à la région de traitement (28) située le plus à l'avant dans le sens d'écoulement de la matière première (14), lequel combustible présente une valeur calorifique inférieure à celle du combustible qui est acheminé jusqu'à une région de traitement (30) suivante.

14. Procédé selon l'une des revendications 11 à 13, dans lequel de l'air de combustion (50) contenant de l'oxygène est acheminé jusqu'à la conduite (32) et/ou jusqu'à au moins l'une des régions de traitement (28, 30).

15. Procédé selon l'une des revendications 11 à 14, dans lequel un dispositif de mesure (54) servant à détecter une teneur en substances nocives, en particulier des oxydes d'azote, des dioxines et/ou des furanes est disposé sur la conduite (32) en aval d'au moins l'une des régions de traitement (28, 30) et/ou dans le dispositif de préchauffage (12), et l'apport de matière première (48) et/ou l'apport de combustibles (36) et/ou l'apport d'air de combustion (50) contenant de l'oxygène et/ou l'apport de substances réduisant les substances nocives dans l'installation (10) sont commandés/régulés en fonction d'une teneur en substances nocives détectée à l'aide du dispositif de mesure (54).
